# EUROPEAN PATENT APPLICATION

(11) **EP 4 647 238 A1**
(43) Date of publication of application: **12.11.2025**
(21) Application number: 25173634.4
(22) Date of filing: 30.04.2025
(51) Int. Cl.: B29C 51/46, B29C 51/26, B29C 51/32, B29L 31/00, G01N 21/84, G01N 21/88

(54) **THERMOFORMING MACHINE**

(30) Priority: 06.05.2024 IT 202400010036; 06.05.2024 CH 4922024
(71) Applicant: WM Thermoforming Machines SA, 6855 Stabio (CH)
(72) Inventor: BURATTIN GOTTI, Riccarda, 6833 Vacallo (CH)
(74) Representative: Fabiano, Piero

(57) **Abstract**

A thermoforming machine (100) is described, comprising:
- a feeding station (2) feeding a thermoformable material sheet (1);
- a thermoforming station (4) comprising a series of cavities, each cavity corresponding to an article to be thermoformed;
- a cutting station (5) configured to die-cut the thermoformed material sheet (1');
- at least one stacking station (8) arranged according to the feeding direction (A) downstream of the said cutting station (5);

a conveying system comprising a gripping member configured to continuously convey a sheet (1,1'), without releasing it, from said feeding station (2) to said at least one stacking station (8);
characterised by comprising at least one inspection apparatus (60) configured to have at least one portion of said thermoformed material sheet (1') in an inspection area (41), said inspection area being flat and defining an inspection plane (42), said inspection apparatus (60) comprising a displaying system (40) comprising:
- a plurality of imaging devices (43);
- a light source configured to emit diffused light, the light source comprising a light-emitting element (46) and a light diffuser (47);
- a module for transmitting the detected images to a processing unit comprising a computer programme configured for the detection of defects.

## Description

### Field of the invention

The present invention relates to a thermoforming machine specifically for the production of plastic articles.

### Known art

As known, thermoforming is a widely used technology for hot molding plastic articles such as plates, cups, trays, tubs, etc.

Typically in a thermoforming machine, a thermoformable material sheet is conveyed into a mold featuring a number of cavities that reproduce the shape of the desired articles.

The mold is typically made up of two mold-halves, typically a lower mold-half and an upper mold-half, which are actuated by a press.

The cavities can be arranged so as to form an array such that one batch of articles (multiple forming) is produced by one press working cycle.

The thermoformable material sheet can adhere to the cavities by suction (vacuum thermoforming) or under the action of a pressure exerted by a fluid, typically air (pressure thermoforming).

After thermoforming, it is known to separate the thermoformed articles from the sheet of thermoformable material by means of a die-cutting operation.

By die-cutting operation a process is meant that cuts out the outline of the articles without however completely separating the articles from the waste sheet, that is, leaving some parts (called "tabs") of the starting sheet that link the articles to one another, so that they can be collectively conveyed together with the sheet.

The articles can then be stacked by using appropriate stacking stations.

The following documents describe some examples of thermoforming machines in the name of the same applicant: EP3556536 and EP3804960.

### Summary of the invention

The Applicant noticed that in the known thermoforming machines the inspection step, aimed at detecting faultiness in thermoformed products or in the steps of feeding the thermoformable material sheet, is still substantially based on human factors, i.e. carried out by an operator who inspects the thermoformed products at the end of the cycle, discarding those that are defective and/or not complying with production standards.

This leads to a huge loss of time and significant material waste, typically, indeed, the time interval between the inspection, the detection of defects and the consequent adjustment of the production parameters on the thermoforming machine is not negligible.

In some cases, batch faultiness is also related to the operator's subjective perception.

The Applicant has therefore addressed the problem of making a thermoforming machine that would allow the inspection process to be automated, by reducing the response times between the detection of any defects and the adjustments to process parameters.

The Applicant also noticed that, in the thermoforming machines in which the thermoformable material sheet is conveyed through the same gripping device continuously and without interruptions between feeding and stacking, and even worse in those in which the cutting is performed in die-cutting stations, inspection is even more difficult and hardly automatable.

The Applicant has therefore specifically addressed the problem of making a thermoforming machine that allows for the inspection process to be automatized in thermoforming machines of the type in which the thermoformable material sheet is moved continuously without interruptions between feeding and stacking and in which the cutting station is a die cutting machine.

Documents EP3745113 and CH719706 relate to thermoforming machines with automated inspection processes.

However, according to the Applicant, the thermoforming machines described in the two patent documents above do not completely solve the problems in the field and therefore a need still remains to create a thermoforming machine that allows for the inspection process to be automatized in thermoforming machines of the type in which the thermoformable material sheet is moved continuously without interruptions between feeding and stacking and in which the cutting station is a die-cutter.

In a first aspect, the invention therefore relates to a thermoforming machine comprising:
- a feeding station feeding a thermoformable material sheet;
- a thermoforming station comprising a series of cavities, each cavity corresponding to an article to be thermoformed;
- a cutting station configured to die-cut the thermoformed material sheet;
- at least one stacking station arranged according to the feeding direction downstream of the cutting station;
   a conveying system comprising a gripping member configured to continuously convey, without releasing it, a sheet from said feeding station to said at least one stacking station;
   characterized by comprising at least one inspection apparatus configured to have at least one portion of said thermoformed material sheet in an inspection area, said inspection area being flat and defining an inspection plane, said inspection apparatus comprising a displaying system comprising a plurality of imaging devices;
- a light source configured to emit diffused light, the light source comprising a light-emitting element and a light diffuser;
- a module for transmitting the detected images to a processing unit comprising a computer programme configured for the detection of defects.

The Applicant has thus obtained a new optimization of the inspection step in a thermoforming machine of the type in which the thermoformable material sheet is moved continuously, without interruptions between feeding and stacking, and in which the cutting station is a die cutting machine.

The present invention, in one or more preferred aspects, may comprise one or more of the following features.

Preferably, the aforesaid at least one inspection apparatus can be placed according to the feeding direction downstream of the cutting station.

Conveniently, the aforesaid at least one inspection apparatus may be placed according to the feeding direction upstream of said stacking station.

Advantageously, in order to check different defects during the manufacturing process, multiple inspection apparatuses are positioned in different positions according to the feeding direction.

Advantageously, each imaging device comprises a lens, and all lenses are contained in a lens plane, and the centre point of each lens is contained in a lens line which is parallel to the inspection plane.

Preferably, the light diffuser comprises a diffusing structure configured to receive light from the light-emitting element and project a diffused light.

Conveniently, the light diffuser comprises a flat rectangular area defined by an upper base, a lower base and two heights, wherein the upper and lower bases are parallel to the inspection plane and the heights are perpendicular to the bases, wherein the upper base is closer to the lens line than the lower base.

Advantageously, the step of identifying defects by means of said computer programme takes place by means of machine learning, deep machine learning or techniques employing convolution neural networks that analyse the information received from said image transmission module.

Further features and advantages of the invention will become more apparent from the detailed description of some preferred, but not exclusive, embodiments of a thermoforming machine according to the present invention.

### Brief description of the drawings

This description will be set forth hereinafter with reference to the attached drawings provided for illustration purposes only and without limitation, in which:
- figure 1 shows a schematic side view of a thermoforming machine according to the invention;
- figure 2 shows a schematic top view of a thermoforming machine of figure 1;

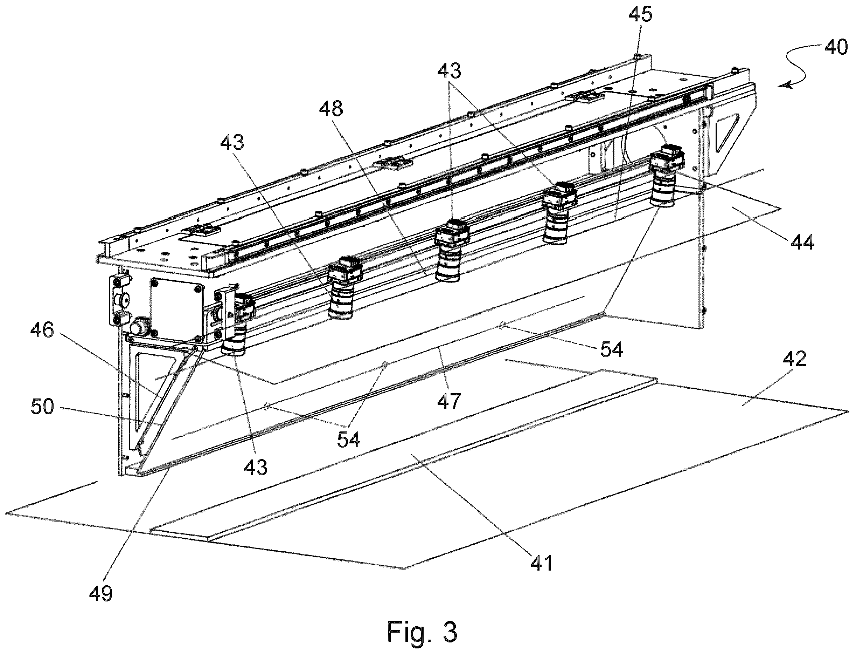

- figure 3 is a schematic perspective view of a displaying system according to the invention, in which the main elements are shown; and
- figure 4 is a side view of the displaying system of figure 3, where some geometric relationships can be seen.

### Detailed description of embodiments of the invention

With reference to the accompanying figures, 100 generally denotes a thermoforming machine according to the present invention.

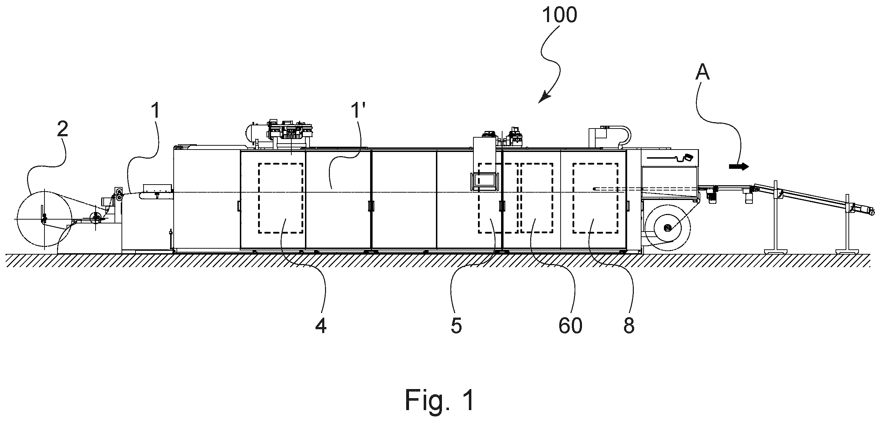

In the thermoforming machine 100 of figure 1, a thermoformable material sheet 1 which is conveyed from a reel 2 into a heating unit, not shown in the figure, heats the material to a temperature sufficient for thermoforming.

After heating, the sheet 1 is fed into a thermoforming station 4 comprising a thermoforming mold; downstream of said thermoforming mold the sheet, turned into a thermoformed material sheet 1', is conveyed to a cutting station 5.

Although a reel 2 is shown by way of example in Fig. 1, the sheet 1 can be fed in a different way, for example by means of a film extruder.

The thermoformable material sheet 1 is conveyed, by a convenient conveying system, along an oriented feeding direction A, which also defines a feeding direction.

In Fig. 1, said feeding direction is from left to right.

According to an important aspect of the present invention, the thermoformable material sheet 1 or thermoformed material sheet 1' is conveyed continuously, in other words without interruptions, from the feeding unit, i.e. from the reel 2 to the stacking station 8 described below.

The sheet 1 is a multilayer sheet (or film), for example.

The thermoforming mold has a number of cavities reproducing the shape of the desired articles. The thermoforming mold essentially comprises a lower mold-half and an upper mold-half.

These mold-halves are operated by a forming press which allows the two mold-halves to be opened and closed on the thermoformable material sheet 1, thus carrying out the thermoforming process.

At least one of the two mold-halves defining the cavities of the desired articles.

An inlet side and an outlet side of the thermoforming mold 4 can be defined.

The inlet side is a hot side since the thermoformable material sheet 1 comes directly from the heating unit 3; the outlet side facing the cutting station 5 can be defined as the cold side.

The cutting station 5 is configured to die-cut the thermoformed material sheet 1'.

By die-cutting term a process is meant that cuts out the outline of the articles without however completely separating the articles from the waste sheet, that is, leaving some parts (called "tabs") of the starting sheet that link the articles to one another, so that they can be collectively conveyed together with the sheet.

Die-cutting machines for this type of application are known to the field technician and therefore not further described.

Downstream of the cutting station 5 there is a stacking station 8 whose task is to extract the thermoformed articles from the cutting station 5 and transfer them to an output device, which is generally an output conveyor to feed the articles to a subsequent process step such as finishing or storage.

The stacking station 8 would also be of a known type and therefore not further described.

According to an important aspect of the present invention, the thermoforming machine comprises at least one inspection apparatus comprising a displaying system 40 configured to capture images of an inspection area 41 on the thermoformable material sheet to be inspected and a module for transmitting the detected images to a processing unit comprising software for the detection of defects.

Preferably, the step of identifying defects by means of said software or computer programme takes place by means of machine learning, deep machine learning or techniques employing convolution neural networks that analyse the information received from said image transmission module.

The inspection apparatus 60 is configured to have a set of products, in an inspection area 41. This may correspond, for example, to the thermoforming mold output, in figure 1, where newly manufactured products are inspected for detecting any defects. These products are shown in the inspection area, so that the displaying system 40 can capture images of these products and send these data to a computer programme configured for the detection of defects. The inspection area 41 is flat and defines an inspection plane 42.

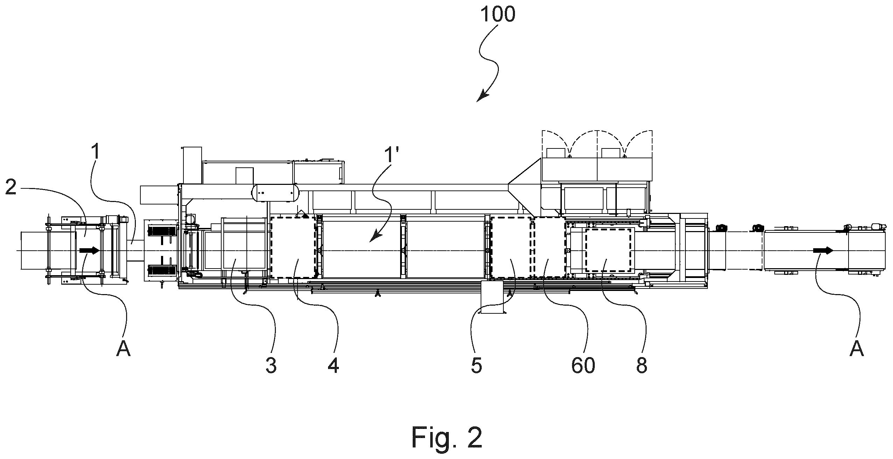

Preferably, in the embodiment shown in figures 1 and 2, the displaying system 40 is placed directly downstream of the cutting station 5.

Even more preferably, the displaying system 40 is placed upstream of the stacking station 8.

Advantageously, in this area not only the defects of the thermoformed material sheet 1', as described in more detail below, but also the cutting quality, can be inspected.

The displaying system 40 comprises a plurality of imaging devices and a light source. The light source A is configured to improve the visibility of the inspection area 41, so that the imaging devices can get images of that area under optimal conditions.

In the embodiment shown in the figures, the imaging devices are cameras or video cameras 43.

These cameras or video cameras 43 are arranged such that the lenses thereof are contained in the same plane as the lens 44 and the centre of said lenses is contained in a lens line 45. In the figure it can be seen how all the cameras or video cameras 43 are arranged equidistant from each other along the ideal line, defined as lens line 45. This arrangement allows the acquisition of images of the portion of the thermoformable material sheet to be inspected, traveling under the cameras or video cameras 43. The images captured by the cameras or video cameras 43 will subsequently be processed by a computer programme comprising a machine learning model in order to detect any defects in the thermoformed material sheet 1'.

The displaying system 40 comprises a light source configured to emit diffused light, so that uniform lighting conditions can be provided for the inspection area. To do so, the light source comprises a light-emitting element and a light diffuser 47.

The light-emitting element comprises a LED structure 46. The LED structure 46 comprises a plurality of LEDs 54 arranged in an array of two rows and three columns. It goes without saying that the size and construction of this array may be modified depending on the power of the LEDs 54 and the lighting requirements.

The light diffuser 47 is configured to receive the light emitted by the LEDs 54 of the LED structure 46 and project diffused light. Preferably, the light diffuser 47 provides constant light conditions.

Light scattering is a well-known phenomenon consisting of dispersion and scattering of light rays coming from LEDs in various directions. It occurs when light passes through a material without being absorbed, but undergoing repeated diffusion events that change the path direction thereof. The scattered light reaches homogeneously and unfocused the objects to be inspected. This way, the light reflected by the object is better received by the cameras 43. To do this, in this particular example of the figures, the diffusing structure comprises machined polycarbonate or polymethylmethacrylate or a combination thereof.

Such a light diffuser 47 has a rectangular shape and is defined by an upper base 48, a lower base 49 and two heights 50. The upper and lower bases 48, 49 are parallel to the inspection plane 42 and the heights 50 are perpendicular to the bases. The upper base 48 is the base closest to the lens line 45. The LEDs are powered by direct current and are not synchronized with any movement, so that the light source is configured to project diffused light continuously.

For proper operation, synchronization is provided between the inspection apparatus 40 and the displaying system 50: the inspection apparatus 40 moves a conveyor belt forward with the products.

This forward movement is driven by a stepper machine, which starts the movement and then stops at the next step. When the machine stops and the next product is positioned in the inspection area, the inspection apparatus sends a signal to the shooting device, so that a shooting order is given to the cameras 43 and the latter are instructed to capture images of the products. This synchronization allows for optimal image acquisition, since the field of view and focal parameters are constant.

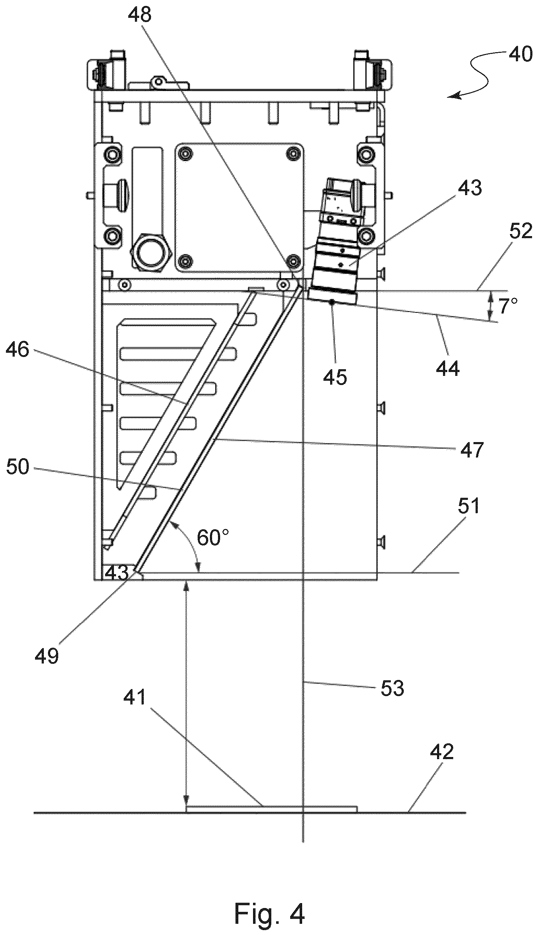

Figure 4 is a side view of the displaying system 40, where some geometric relationships can be seen.

First, three reference planes are defined, which are perpendicular to the view of this figure: a first reference plane 51 defined as the plane containing the lower base 49 (which in this figure is seen as a point, since it is perpendicular to the viewer) and being parallel to the inspection plane 42, a second reference plane 52 defined as the plane containing the upper base 48 (which in this figure is also seen as a point) and parallel to the inspection plane 42 and, finally, a third reference plane 53 defined as a plane perpendicular to the inspection plane 42 and containing the upper base 48.

It can be seen how the flat rectangular area of the light diffuser 47 forms an angle between 50° and 70° in a counterclockwise direction with respect to the inspection plane 42. Specifically, in this example, this angle is equal to 60°.

The plane of the lens 44 forms an angle between 2° and 10° in a clockwise direction with respect to the inspection plane 42. Specifically, this angle is 7° in the present example.

The light emitting plane 55, containing the LEDs, is parallel to the flat rectangular area of the light diffuser 47.

The distance between the lens line 5 and the first reference plane 11 is between 1.1 and 1.4 times the distance between the first reference plane 11 and the inspection plane 2. In this case, it is 1.25 times the distance between the first reference plane 11 and the inspection plane 2.

The distance between the upper base 48 and the lower base 49 is between 1.3 and 1.6 times the distance between the first reference plane 51 and the inspection plane 52.

As can be seen in this figure, the lens line 45 is comprised in the gap between the first reference plane 51 and the second reference plane 52. Furthermore, the lens line 45 is arranged on one side of the third reference plane 53 and the light diffuser 47 is arranged on the other side of the third reference plane 53. Therefore, the light diffuser 47 projects light that is reflected into the object to be inspected. The reflection of this diffused light reaches the cameras 43, so that image acquisition can be regularly performed.

Various modifications may be made to the embodiments described in detail, all anyhow remaining within the protection scope of the invention, as defined by the following claims.

## Claims

1. Thermoforming machine (100) comprising:
- a feeding station (2) feeding a thermoformable material sheet (1);
- a thermoforming station (4) comprising a series of cavities, each cavity corresponding to an article to be thermoformed;
- a cutting station (5) configured to die-cut the thermoformed material sheet (1');
- at least one stacking station (8) arranged according to the feeding direction (A) downstream of the said cutting station (5);
a conveying system comprising a gripping member configured to continuously convey a sheet (1,1'), without releasing it, from said feeding station (2) to said at least one stacking station (8);
**characterised by** comprising at least one inspection apparatus (60) configured to have at least one portion of said thermoformed material sheet (1') in an inspection area (41), said inspection area being flat and defining an inspection plane (42), said inspection apparatus (60) comprising a displaying system (40) comprising:
- a plurality of imaging devices (43);
- a light source configured to emit diffused light, the light source comprising a light-emitting element (46) and a light diffuser (77);
- a module for transmitting the detected images to a processing unit comprising a computer programme configured for the detection of defects.

2. Thermoforming machine (100) according to claim 1, **characterised in that** said at least one inspection apparatus (60) is placed according to the said feeding direction (A) downstream of said cutting station (5).

3. Thermoforming machine (100) according to claim 1, **characterised in that** said at least inspection apparatus (60) is placed according to the said feeding direction (A) upstream of said stacking station (8).

4. Thermoforming machine (100) according to claim 1, **characterised in that** there are multiple inspection apparatuses (60) positioned in different positions according to the said feeding direction (A).

5. Thermoforming machine (100) according to claim 1, **characterised in that** each imaging device (43) comprises a lens and all lenses are contained in a lens plane (44), and the centre point of each lens is contained in a lens line (45) which is parallel to the inspection plane (42).

6. Thermoforming machine (100) according to claim 1, **characterised in that** said light diffuser (47) comprises a diffusing structure configured to receive light from the light-emitting element (46) and project a diffused light.

7. Thermoforming machine (100) according to claim 1, **characterised in that** said light diffuser (47) comprises a flat rectangular area defined by an upper base (48), a lower base (49) and two heights (50), wherein the upper and lower bases (48, 49) are parallel to the inspection plane (42) and the heights (50) are perpendicular to the bases, wherein the upper base (48) is closer to the lens line (55) than the lower base (49).

8. Thermoforming machine (100) according to any one of preceding claims 1 to 7, **characterised in that** the step of identifying defects by means of said computer programme takes place by means of machine learning, deep machine learning or techniques employing convolution neural networks that analyse the information received from said image transmission module.
